# EUROPÄISCHE PATENTSCHRIFT

(11) **EP 2 182 172 B1**
(45) Veröffentlichungstag und Bekanntmachung des Hinweises auf die Patenterteilung: **16.05.2012**
(21) Anmeldenummer: 10001422.4
(22) Anmeldetag: 12.10.2004
(51) Int. Cl.: F01D 11/10, F01D 5/20, F01D 5/14, F04D 29/68

(54) **Strömungsarbeitsmaschine mit Fluidzufuhr**
Compressing turbomachine with fluid injection
Turbomachine comprimante avec injection de fluide

(30) Priorität: 26.11.2003 DE 10355241
(43) Veröffentlichungstag der Anmeldung: 05.05.2010
(62) Teilanmeldung aus: 04024292.7
(73) Patentinhaber: Rolls-Royce Deutschland Ltd & Co KG, 15827 Blankenfelde-Mahlow (DE)
(72) Erfinder: Gümmer, Volker, Dr., 15831 Mahlow (DE)
(74) Vertreter: Weber, Joachim

(56) Entgegenhaltungen:
- DE-A1- 2 405 050
- DE-A1- 4 003 802
- DE-T2- 3 850 681
- FR-A- 1 002 324
- GB-A- 2 158 160
- US-A- 5 403 158
- US-A- 5 476 364

## Beschreibung

Die vorliegende Erfindung bezieht sich auf Strömungsarbeitsmaschinen wie etwa Bläser, Verdichter, Pumpen und Ventilatoren, sowohl in axialer, halbaxialer als auch in radialer Bauart. Das Arbeitsmedium oder Fluid kann gasförmig oder flüssig sein.

Im Einzelnen betrifft die Erfindung eine Strömungsarbeitsmaschine mit zumindest einem Rotor, wobei der Rotor mehrere an einer rotierenden Welle befestigte Rotorschaufeln umfasst. Es kann mindestens ein Stator existieren, wobei der Stator mit feststehenden Statorschaufeln versehen ist. Es kann ein Gehäuse existieren, welches die Durchströmung des Rotors und des Stators mit einem Fluid nach außen begrenzt.

Die aerodynamische Belastbarkeit und die Effizienz von Strömungsarbeitsmaschinen, beispielsweise Bläsern, Verdichtern, Pumpen und Ventilatoren, wird durch das Wachstum und die Ablösung von Grenzschichten auf den Schaufeln sowie auf den Naben- und Gehäusewänden begrenzt. Der Stand der Technik hält für dieses fundamentale Problem nur bedingt Lösungen bereit. Es existieren zahlreiche Konzepte zur Fluidzufuhr an Turbinenschaufeln, doch sind diese nicht auf Strömungsarbeitsmaschinen übertragbar, da sie im wesentlichen der Oberflächenkühlung und nicht der Grenzschichtenergetisierung dienen. Aus Verdichtergitterexperimenten sind Konzepte bekannt, bei denen aus einer druckbeaufschlagten Kammer im Schaufelinnern Luft auf die Schaufelsaugseite ausgeblasen wird, um die zweidimensional beschaffene Profilgrenzschicht zu energetisieren. Verwandte Alternativlösungen sehen ein direktes Durchtreten des Fluides von der Schaufeldruckseite zur Schaufelsaugseite vor. Daneben existiert für Rotoren ein Konzept zur Luftzufuhr an Nabe und Gehäuse durch achsensymmetrisch angeordnete Schlitze, um die dortigen Wandgrenzschichten zu beeinflussen. Schließlich gibt es Veröffentlichungen von Forschungsinstitutionen, die Konzepte aufzeigen, bei denen Rotoren in Gehäusenähe aus einzelnen Düsen angeblasen werden, um die dortige Radialspaltströmung günstig zu beeinflussen. Der allgemeine Gedanke der Grenzschichtbeeinflussung durch Einblasung bzw. Fluidzufuhr ist somit im Stand der Technik enthalten, doch sind die bekannten Lösungen trivial und nur bedingt effektiv.

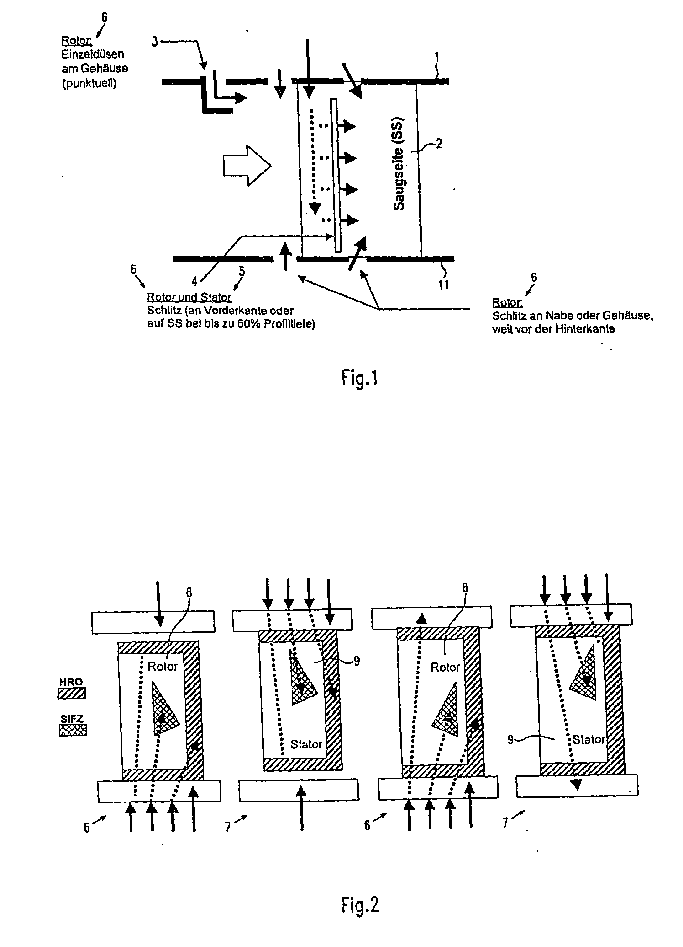

Die Fig.1 zeigt in schematischer Darstellung die aus dem Stand der Technik bekannten Lösungen. Gezeigt sind in schematischer Darstellung eine Nabe 11 und ein Gehäuse 1, zwischen welchen ein Fluid, wie durch den großen Pfeil dargestellt, von links anströmt. Weiterhin ist eine Schaufel 2 dargestellt, die entweder ein Rotor 6 oder Stator 5 sein kann und deren sichtbarer Bereich die Saugseite bildet. Wie durch die Pfeile angedeutet ist, existieren Entwürfe für eine lokale Luftzufuhr an unterschiedlichen Stellen der Strömungsarbeitsmaschine. Für Rotor- und Statorbeschaufelungen sowie ebene Experimentalschaufelgitter ist es bekannt, zwischen der Vorderkante und etwa 60% der Profiltiefe über Schlitze 4 Fluid auf die Schaufelsaugseite einzublasen, um die zweidimensional beschaffene Profilgrenzschicht zu beeinflussen. Das dazu notwendige Fluid tritt dabei aus einem hohlen, druckbeaufschlagten Innenraum der Schaufel 2 in den Hauptströmungspfad ein. Bei alternativen Lösungen ist das Schaufelprofil geteilt, um die Versorgung durch ein direktes Durchtreten des Fluides von der Schaufeldruckseite zur Schaufelsaugseite zu ermöglichen.

Für den Fall eines Rotors ist es bekannt, vor oder innerhalb des Bereichs der vorderen 50% der Profiltiefe durch einen achsensymmetrisch angeordneten Schlitz 3 Fluid an der Nabe 11 und/oder am Gehäuse 1 zuzuführen, um eine Beeinflussung der Wandgrenzschichten zu erreichen. Für Rotoren mit Gehäuseradialspalt existieren zudem Konzepte, die vorsehen, durch eine Anzahl von in den Strömungspfad vorstehenden Düsen 3 am Gehäuse Fluid punktuell einzublasen, um an diskreten Orten des Umfangs auf die Spaltströmung des Rotors Einfluss zu nehmen.

Eine hier nicht dargestellte Lösung sieht eine Entnahme auf der Schaufelsaugseite und ein Wiedereinströmen an anderer Stelle derselben Schaufel, nämlich der Schaufelspitze vor.

Der Stand der Technik beschreibt somit die folgenden Methoden einer Zufuhr von Fluid:
1.) durch gerade Schlitze im vorderen oder mittleren Bereich der Schaufelsaugseite an Rotoren und Statoren
2.) durch achsensymmetrische, flächenbündige Schlitze in Nabe und/oder Gehäuse weit vor der Schaufelhinterkante an Rotoren mit Gehäuseradialspalt
3.) durch eine Anzahl am Umfang verteilter, vorstehender Einzeldüsen am Gehäuse vor Rotoren mit Gehäuseradialspalt.

Die meisten dieser Konzepte sind nur bedingt auf strömungstechnisch besonders problematische Zonen innerhalb der Schaufelpassage ausgerichtet oder orientieren sich an der einfachen Vorstellung einer zweidimensionalen Profilumströmung ohne die Berücksichtigung der komplizierten dreidimensionalen Strömungsvorgänge im Seitenwandbereich (nahe an Nabe und Gehäuse). Andere sind trotz ihrer Ausrichtung auf lokal kritische Strömungszonen von begrenzter Wirksamkeit.

Üblicherweise wird beim Stand der Technik Hilfsluft höheren Druckes von extern zugeführt. Ein Patent sieht eine Luftversorgung von Schlitzen einer weiter stromab gelegenen Stelle der Strömungsarbeitsmaschine vor.

Der oben beschriebene Stand der Technik ist schriftlich in nachfolgenden Veröffentlichungen dokumentiert:
US 5,690,473 (Turbine blade having transpiration strip cooling and method of manufacture)
US 6,334,753 (Streamlined bodies with counter-flow fluidinjection)
US 2,870,957 (Compressors)
US 2,933,238 (Axial flow compressors incorporating boundary layer control)
US 5,480,284 (Self bleeding rotor blade)

Als nachteilig erweist sich beim Stand der Technik, dass die existierenden Lösungen keine hochwirksamen und insbesondere hinsichtlich des Wirkungsgrades der Strömungsarbeitsmaschine günstigen Lösungen bilden. Vielmehr sind die existierenden Einblasekonzepte vergleichsweise primitiv und sehen entweder die alleinige Einblasung auf der Schaufelsaugseite vor oder kombinieren dies mit einer Einblasung vor oder in der Schaufelreihe durch achsensymmetrische Ringschlitze an Nabe und/oder Gehäuse. Offensichtlich fehlen Konzepte zur gezielten Strömungsbeeinflussung im randnahen Bereich und zur radial (in Schaufelhöhenrichtung) variablen Beinflussung der Profilgrenzschichten.

Diese gezielte Beeinflussung der dreidimensionalen Strömungsvorgänge im Bereich der Schaufelenden (und des damit verbundenen Strömungsaustausches in Schaufelhöhenrichtung) wird durch existierende Konzepte nicht berücksichtigt.

Aus der US 5,480,284 A ist eine Strömungsarbeitsmaschine mit einem Rotorblatt bekannt, welches eine sich in Radialrichtung erstreckende innenliegende Kammer aufweist, durch welche Fluid ausgeblasen wird. Die Fluidausbringung erfolgt auch am stirnseitigen Endbereich der Schaufel.

Die FR 1 002 324 A offenbart eine Strömungsarbeitsmaschine, bei welcher eine hohl ausgebildete Schaufel in Radialrichtung durchströmt wird, wobei die Strömung an der Stirnfläche des freien Schaufelendes austritt und dieses zusätzlich strukturiert sein kann.

Die DE 24 05 050 A1, Die GB 2 158 160 A sowie die DE 38 50 681 T2 zeigen jeweils Schaufeln, die durchströmt werden und bei denen ein Strömungsaustritt am Schaufelende erfolgt.

Der vorliegenden Erfindung liegt die Aufgabe zugrunde, eine Strömungsarbeitsmaschine der eingangs genannten Art zu schaffen, welche unter Vermeidung des Standes der Technik eine sehr wirkungsvolle Grenzschichtbeeinflussung durch gezielte Fluidzufuhr sowie einen hohen Wirkungsgrad aufweist.

Erfindungsgemäß wird die Aufgabe durch die Merkmalskombination des Hauptanspruchs gelöst, die Unteransprüche zeigen weitere vorteilhafte Ausgestaltungen der Erfindung.

Die erfindungsgemäße Strömungsarbeitsmaschine kann eine oder mehrere Stufen mit jeweils einem Rotor und einem Stator umfassen; in Einzelfällen wird die Stufe lediglich durch einen Rotor gebildet.

Erfindungsgemäß besteht der Rotor aus einer Anzahl von Schaufeln, die mit der rotierenden Welle der Strömungsarbeitsmaschine verbunden sind und Energie an das Arbeitsmedium abgeben. Der Rotor wird ohne Deckband am äußeren Schaufelende ausgeführt. Der erfindungsgemäße Stator besteht aus einer Anzahl feststehender Schaufeln, die nabenseitig mit freiem Schaufelende ausgeführt sind.

Die erfindungsgemäß vorgesehene Rotortrommel und die Beschaufelung sind von einem Gehäuse umgeben. Erfindungsgemäß kann die Strömungsarbeitsmaschine einen Stator vor dem ersten Rotor aufweisen, ein sogenanntes Vorleitrad.

Erfindungsgemäß kann mindestens ein Stator oder Vorleitrad abweichend von der unbeweglichen Fixierung auch drehbar gelagert sein, um den Anströmwinkel zu verändern. Eine Verstellung erfolgt beispielsweise durch eine von außerhalb des Ringkanals zugängliche Spindel.

In besonderer Ausgestaltung kann die Strömungsarbeitsmaschine mindestens eine Reihe verstellbarer Rotoren aufweisen.

In einer alternativen Ausgestaltung der erfindungsgemäßen Strömungsarbeitsmaschine kann auch vorgesehen sein, dass diese bei Mehrstufigkeit zwei gegenläufige Wellen besitzt, so dass die Rotorschaufelreihen von Stufe zu Stufe die Drehrichtung wechseln. Hierbei existieren keine Statoren zwischen aufeinander folgenden Rotoren.

Erfindungsgemäß kann die Strömungsarbeitsmaschine alternativ auch eine Nebenstromkonfiguration derart aufweisen, daß sich der einstromige Ringkanal hinter einer bestimmten Schaufelreihe in zwei konzentrische Ringkanäle aufteilt, die ihrerseits mindestens jeweils eine weitere Schaufelreihe umfassen.

Erfindungsgemäß ist somit im Einzelnen eine Strömungsarbeitsmaschine geschaffen worden, die Mittel zur Zufuhr von Fluid an mindestens einer Schaufel einer Schaufelreihe des Rotors und/oder des Stators an aerodynamisch kritischen Orten auf hinterkanten- und randnahen Oberflächen (HRO) umfaßt.

Zusätzlich zu Fluidzufuhrvorrichtungen an HRO weist die Strömungsarbeitsmaschine möglicherweise an mindestens einer Schaufel einer Rotor- oder Statorreihe Mittel zur Fluidzufuhr auf, die auf der Schaufelsaugseite in Meridianströmungsrichtung nicht punktuell, sondern über einen definierten Bereich verteilt angelegt sind, und deren Meridianerstreckung in meridianstromlinienorthogonaler Richtung zu wenigstens einer der Ringkanalwände (Nabe oder Gehäuse) hin abnimmt (saugseitige, intensitätsvariable Fluidzufuhr SIFZ).

Im Folgenden mit den Figuren beschrieben wobei lediglich die Figuren 15 bis 18 die Erfindung betreffen. Dabei zeigt:
- Fig.1:: eine schematische Darstellung des Standes der Technik
- Fig.2:: eine schematische Darstellung von Varianten des werden Beispiele von Fluidzufuhrvorrichtungen Grundkonzeptes
- Fig.3:: eine weitere schematische Darstellung von Vari- anten des werden Beispiele von Fluidzufuhrvorrichtungen Grundkonzeptes
- Fig.4:: verschiedene Varianten und Konfigurationen der erfindungsgemäßen Strömungsarbeitsmaschine
- Fig.5:: eine Darstellung zur werden Beispiele von Fluidzufuhrvorrichtungen Definiti- on des Begriffs HRO
- Fig.6:: eine Darstellung zur werden Beispiele von Fluidzufuhrvorrichtungen Definiti- on von HRO, Typen A und B
- Fig.7:: eine Darstellung zur Definiti- on von HRO, Typen C, D und E
- Fig.8:: eine weitere Darstellung zur Definition von HRO, Typen C, D und E
- Fig.9 bis 11:: unterschiedliche Ausgestaltungsformen von Kam- mern zur Zuführung des Fluids, vornehmlich vom Gehäuse aus
- Fig.12 bis 14:: Ausgestaltungsvarianten analog Fig.9 bis 11 mit Kammern zur Zuführung des Fluids, vornehmlich von der Nabe aus
- Fig.15 bis 20:: Ausführungsvarianten einer Fluidzufuhrvorrichtung an Hinterkanten- und Randnahen Oberflächen (HRO) des Typs E

Die Fig. 2 zeigt in stark vereinfachter Darstellung eine Lösung an vier unterschiedlich konfigurierten Schaufelreihen, welche jeweils einen Rotor 6 beziehungsweise einen Stator 7 umfassen, die mit Rotorschaufeln 8 beziehungsweise Statorschaufeln 9 versehen sind. Mit dem Bezugszeichen 1 wird in stark vereinfachter Darstellung ein Gehäuse oder ein außenliegendes Deckband wiedergegeben. Das Bezugszeichen 11 kennzeichnet eine Rotortrommel oder ein innenliegendes Deckband. Die gewählte Ansicht der Schaufel kann sowohl die Saugseite als auch die Druckseite der Schaufel repräsentieren. Auf Rotoren und Statoren ist eine Zone für saugseitige intensitätsvariable Fluidzufuhr (SIFZ) vorgesehen.

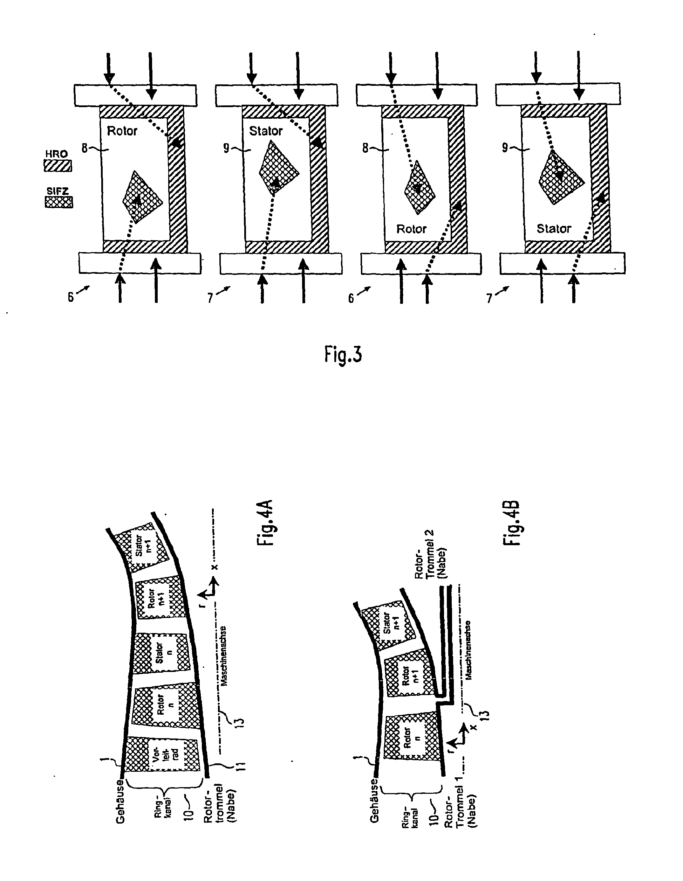

In analoger Weise zeigt Fig. 3 das Grundkonzept.

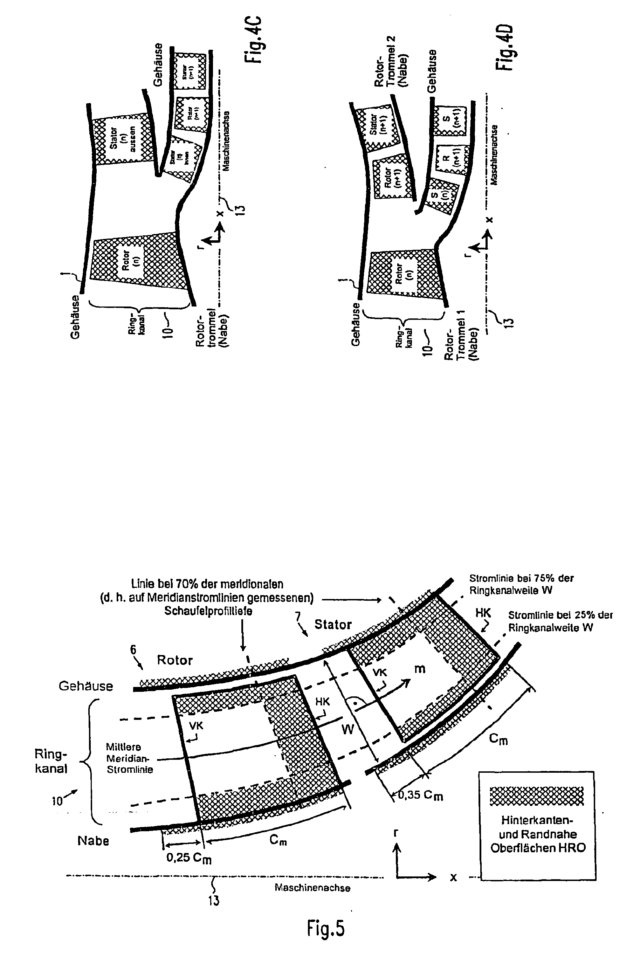

Die Fig. 4 zeigt vier verschiedene Konfigurationen der erfindungsgemäßen Strömungsarbeitsmaschine. Dabei bezeichnet das Bezugszeichen 10 einen von links nach rechts zu durchströmenden Ringkanal, mit dem Bezugszeichen 13 ist die Maschinenachse dargestellt, um welche sich eine Rotortrommel (Nabe) 11 dreht. Bei den in Fig. 5B und 5D gezeigten Ausführungsbeispielen ist eine weitere Rotortrommel (Nabe) vorgesehen. Die Rotoren, Statoren sowie das Vorleitrad sind jeweils in Fig. 5 beschriftet, es ist jeweils in schematischer Weise eine Schaufel dargestellt.

Die Fig. 5 zeigt die Definition der Hinterkanten- und Randnahen Oberflächen (HRO). Es ist wiederum vereinfacht ein Rotor 6 sowie ein Stator 7 gezeigt, die im Ringkanal 10 zwischen einem Gehäuse 1 und einer Nabe (Rotortrommel) 11 angeordnet sind.

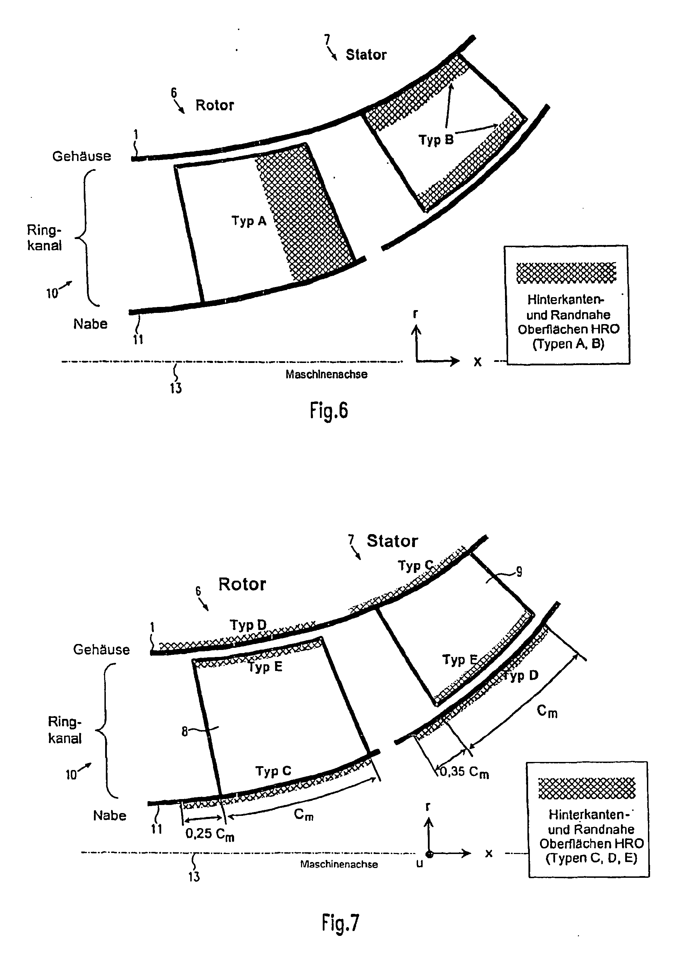

Wie die Darstellungen in Fig. 6 und 7 zeigen, ergeben sich fünf HRO-Typen:

HRO, Typ A: Die Oberflächen sind an der Schaufelsaug- oder Druckseite eines Rotors oder Stators ausgebildet, und zwar zwischen 70% und 100% der meridionalen Schaufelsehnenlänge Cm. O-berflächenabschnitte im zentralen Bereich der Hinterkante, deren Oberflächennormale einen Winkel von weniger als 60 Grad mit der mittleren Abströmrichtung bildet, sind dabei ausgeschlossen.

HRO, Typ B: Die Oberflächen sind an der Schaufelsaugseite, der Schaufeldruckseite, der Vorderkante oder der Hinterkante eines Rotors oder Stators ausgebildet, und zwar an der Nabe zwischen 0% und 25% der lokalen Ringkanalweite W und am Gehäuse zwischen 75% und 100% der lokalen Ringkanalweite W.

HRO, Typ C: Die Oberflächen sind an der Naben- oder Gehäusekontur des Ringkanals mit fester Verbindung zur Schaufel ausgebildet, wie sie im Fall von Plattformen, Deckbändern, Blisk- und Blingkonfigurationen auftreten, und zwar zwischen der Hinterkantenebene HK und einer Ebene, die sich 25% der meridionalen Schaufelsehnenlänge Cm vor der Vorderkante VK befindet.

HRO, Typ D: Die Oberflächen sind an Naben- und Gehäusekontur des Ringkanals 10 im Bereich freier Schaufelenden (oberhalb von Rotoren ohne Deckband oder unterhalb von Statoren ohne Deckband) zwischen der Hinterkantenebene HK und einer Ebene, die sich 35% der meridionalen Schaufelsehnenlänge Cm vor der Vorderkante VK befindet, ausgebildet.

HRO, Typ E: Die Oberflächen sind an Schaufeln an deren freien Schaufelenden ausgebildet, die der Naben- oder der Gehäusekontur des Ringkanals 10 zugewandt sind (Spitzenstirnflächen der Schaufel).

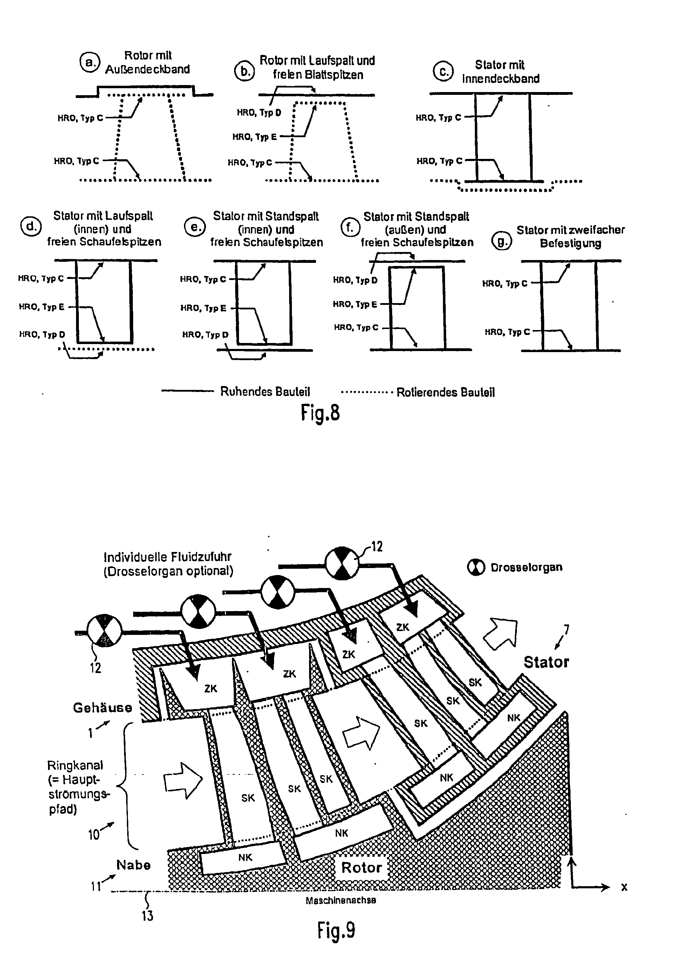

Die Fig. 8 zeigt unterschiedliche Ausführungen von Schaufelreihen der erfindungsgemäßen Strömungsarbeitsmaschine mit einer Kennzeichnung der wiederkehrenden Elemente HRO, Typ C, Typ D, Typ E. Im Einzelnen zeigen dabei die Ausführungsbeispiele Folgendes:

Die Fig. 8a zeigt eine Baugruppe, bestehend aus einer Rotortrommel, mit mehreren mit der Trommel rotierenden Rotorschaufeln, einem die Rotorschaufeln am äußeren Umfang umgebenden und mitrotierenden Deckband sowie einem die rotierenden Teile umgebenden und ruhenden Gehäuse.

Die Fig. 8b zeigt eine Variante mit einer Baugruppe, bestehend aus einer Rotortrommel, mehreren mit der Trommel rotierenden Rotorschaufeln mit freien äußeren Enden, sowie einem die rotierenden Teile umgebenden und ruhenden Gehäuse.

Die Fig. 8c zeigt eine Baugruppe, bestehend aus einem ruhenden Außengehäuse, mehreren mit dem Außengehäuse verbundenen Statorschaufeln, sowie einem von den Statorschaufeln am inneren Umfang getragenes Deckband und einer innerhalb der ruhenden Bauteile rotierenden Rotortrommel.

Die Fig. 8d zeigt eine Baugruppe, bestehend aus einem ruhenden Außengehäuse, mehreren mit dem Außengehäuse verbundenen Statorschaufeln mit freien inneren Enden und einer innerhalb der ruhenden Bauteile rotierenden Rotortrommel.

Aus Fig. 8e ist eine Baugruppe ersichtlich, welche aus einem ruhenden Außengehäuse, mehreren mit dem Außengehäuse verbundenen Statorschaufeln mit freien inneren Enden, und einem innerhalb der Statorschaufelreihe ruhenden Innengehäuse besteht.

Die Fig. 8f zeigt eine Baugruppe, bestehend aus einem ruhenden Innengehäuse, mehreren mit dem Innengehäuse verbundenen Statorschaufeln mit freien äußeren Enden, und einem die Statorschaufelreihe umgebenden Außengehäuse.

Die Fig. 8g verdeutlicht eine Baugruppe, welche aus einem ruhenden Innen- und Außengehäuse besteht, sowie mehreren mit dem Innen- und Außengehäuse verbundenen Statorschaufeln.

Die Führung des zuzuführenden Fluids erfolgt über Strömungswege an der Peripherie des Ringkanals 10 oder innerhalb von Schaufeln 8, 9 und ihrer umgebenden Bauteile. Dabei wird das Fluid entweder bei freier Strömung oder aber mit Hilfe mindestens eines im Strömungsweg befindlichen Drosselorgans 12, das unverstellbar oder auch regelbar sein kann, in den Ringkanal im Bereich der betreffenden Schaufelreihe zugeführt. Die Zuführung des Fluids erfolgt entweder von einer Fremdquelle aus oder wird von Orten der Strömungsarbeitsmaschine oder der die Strömungsarbeitsmaschine einschließenden Gesamtanlage zurückgeführt.

Die notwendigen Elemente des Strömungsweges können als einfacher Hohlraum, als Ringraum, als Rohrleitung, als Kanal, als Düse oder als Diffusor beliebiger Querschnittsform ausgestaltet sein und werden im Folgenden unter dem Begriff "Kammer" zusammengefaßt.

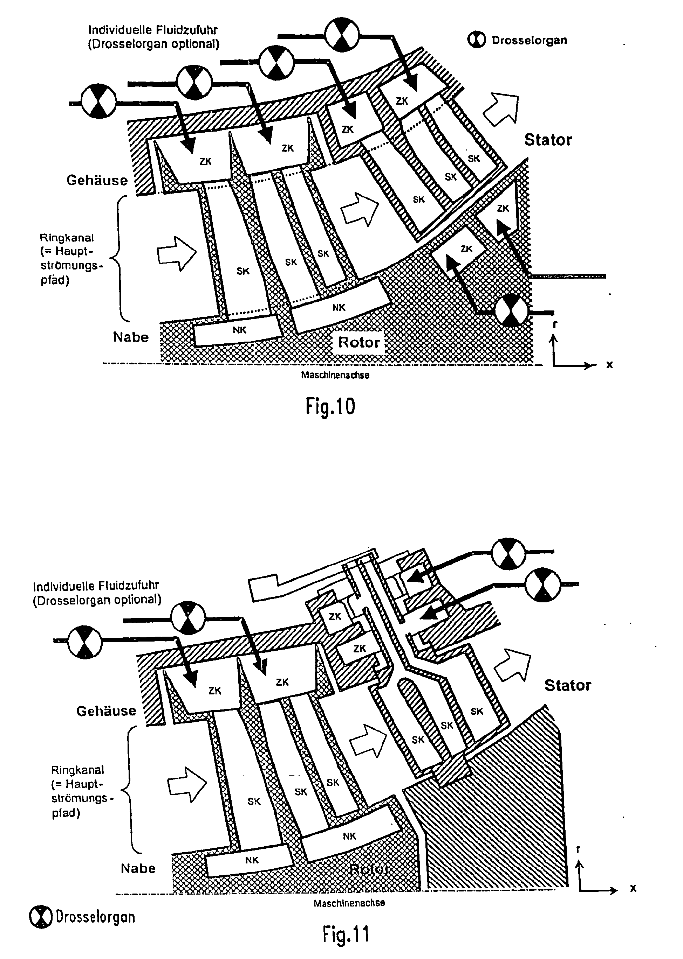

Die Fig. 9 bis 11 zeigen unterschiedliche Ausgestaltungsvarianten mit Konfigurationen, bei welchen Zufuhrkammern (ZK), Schaufelinnenkammern (SK) und Nabenkammern (NK) vorgesehen sind.

Im Einzelnen zeigen die Fig. 9 bis 11 Ausgestaltungsvarianten, bei welchen den einzelnen Schaufelreihen jeweils mindestens eine Kammer am oder im Gehäuse zugeordnet ist, durch die Fluid der Schaufelreihe zugeführt wird (Zufuhrkammer ZK). Für den Fall, dass mindestens eine weitere Kammer im Inneren mindestens einer Schaufel existiert, die sich über die Gesamtheit oder nur Teile der Schaufelhöhe erstreckt (Schaufelinnenkammer SK), kann jede Zufuhrkammer ZK mit mindestens einer Schaufelinnenkammer SK in Verbindung stehen und dieser Fluid zuführen. Besitzt die Schaufel eine feste Anbindung zur inneren Ringkanalkontur, so kann als letztes Kammerglied des zur Fluidzufuhr konzipierten Gesamtströmungsweges mindestens eine Kammer an oder in der Nabe außerhalb des Ringkanals existieren (Nabenkammer NK), die mit mindestens einer Schaufelinnenkammer SK in Verbindung steht und von dieser Fluid entgegen nimmt.

Besitzt die Schaufel ein freies Ende mit Radialspalt an der Nabe, oder weist die Schaufel keine über die gesamte Schaufelhöhe reichende Schaufelinnenkammer auf, kann zur Fluidzufuhr an der Nabe ebenfalls mindestens eine Zufuhrkammer ZK an oder in der Nabe außerhalb des Ringkanals existieren.

Zufuhrkammern und Nabenkammern erstrecken sich über die Gesamtheit oder Teile des Maschinenumfangs. Die Zufuhrkammern ZK dienen der Zuleitung des Fluids zur betreffenden Schaufelreihe, wobei die Schaufelinnenkammern SK Nabenkammern Hilfsmittel sind, um den Zugang zu den relevanten Hinterkanten- und Randnahen Oberflächen (HRO) der betreffenden Schaufelreihe herzustellen.

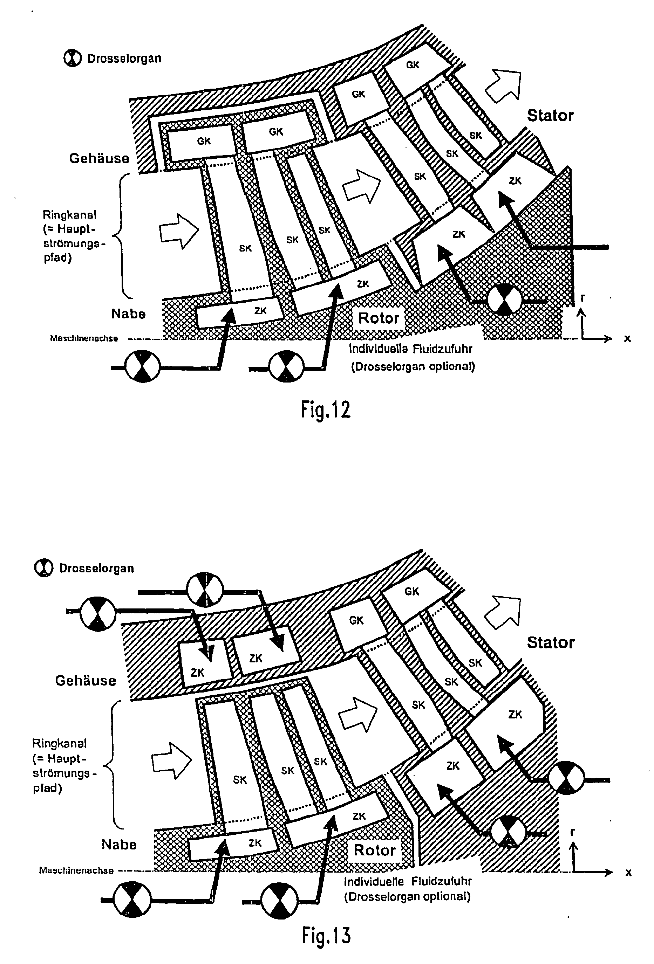

Während in den Fig. 9 bis 11 Ausgestaltungsformen gezeigt wurden, bei welchen mindestens eine Zufuhrkammer ZK am oder im Gehäuse angeordnet ist, zeigen die Fig. 12 bis 14 Ausgestaltungsformen, bei welchen mindestens eine Kammer an oder in der Nabe angeordnet ist, durch die Fluid der Schaufelreihe zugeführt wird (Zufuhrkammer ZK). Für den Fall, dass mindestens eine weitere Kammer im Innern mindestens einer Schaufel existiert, die sich über die Gesamtheit oder nur Teile der Schaufelhöhe erstreckt (Schaufelinnenkammer SK), kann jede Zufuhrkammer ZK mit mindestens einer Schaufelinnenkammer SK in Verbindung stehen und dieser Fluid zuführen. Besitzt die Schaufel eine feste Anbindung zur äußeren Ringkanalkontur, so kann als letztes Kammerglied des zur Fluidzufuhr konzipierten Gesamtströmungsweges mindestens eine Kammer am oder im Gehäuse existieren (Gehäusekammer GK), die mit mindestens einer Schaufelinnenkammer SK in Verbindung steht und von dort Fluid entgegen nimmt.

Besitzt die Schaufel ein freies Ende mit Radialspalt am Gehäuse oder weist die Schaufel keine über die gesamte Schaufelhöhe reichende Schaufelinnenkammer auf, kann zur Fluidzufuhr am Gehäuse ebenfalls mindestens eine Zufuhrkammer am oder im Gehäuse außerhalb des Ringkanals existieren.

Die Zufuhrkammern und Gehäusekammern erstrecken sich über die Gesamtheit oder nur Teile des Umfangs der Strömungsarbeitsmaschine. Die Zufuhrkammern dienen der Zuleitung des Fluids zu der betreffenden Schaufelreihe. Die Schaufelinnenkammern und die Gehäusekammern sind Hilfmittel, um den Zugang zu relevanten Hinterkanten- und Randnahen Oberflächen (HRO) im Bereich der betreffenden Schaufelreihe herzustellen.

Es ist vorgesehen, dass bei einer Schaufelreihe der im Zusammenhang mit den Fig. 9 bis 11 bzw. 12 bis 14 beschriebenen Ausgestaltungsformen an mindestens einer Hinterkanten- und Randnahen Oberfläche (HRO) an mindestens einer ihrer Schaufeln und/oder mindestens einem ihrer den Ringkanal begrenzenden Bauteile mindestens eine Fluidzufuhrvorrichtung angeordnet ist, die eine Verbindung zwischen der Hinterkanten- und Randnahen Oberflächen (HRO) und einer Zufuhrkammer ZK, einer Schaufelinnenkammer SK, einer Nabenkammer NK oder einer Gehäusekammer GK herstellt. Die konstruktive Ausführung der Fluidzufuhrvorrichtung erfolgt durch mechanische, chemische oder thermische Materialabtragsverfahren an dem die Hinterkanten- und Randnahen Oberfläche (HRO) bildenden Bauteil.

In einer alternativen Ausgestaltung erhält die Fluidzufuhrvorrichtung ihre Begrenzungen durch Kombination mindestens zweier vorbereiteter Einzelbauteile, die lose oder fest zusammengefügt werden.

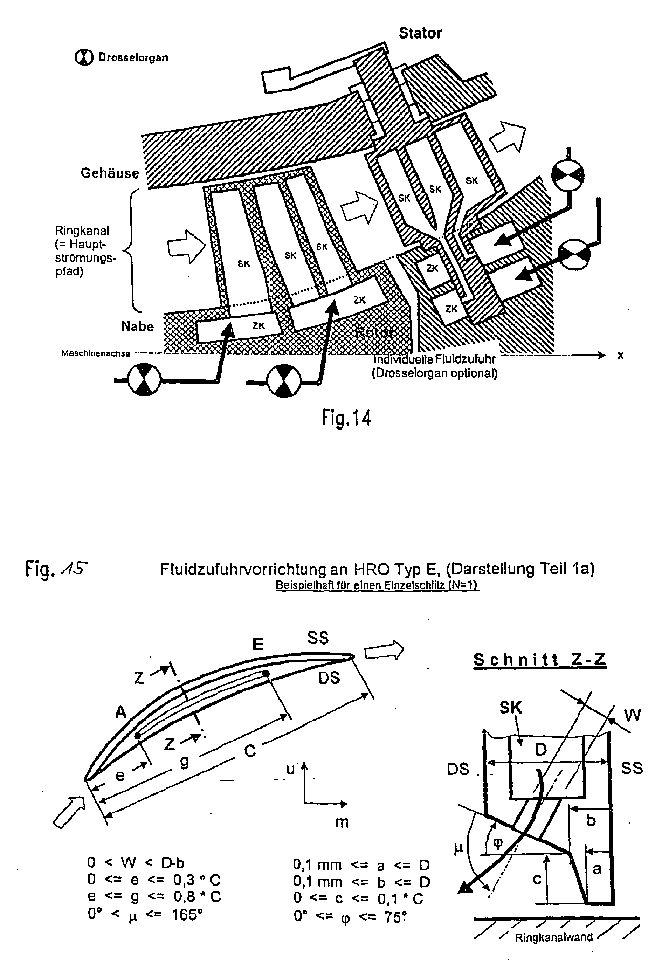

Die Fig. 15 bis 20 zeigen Ausführungsbeispiele der Fluidzufuhrvorrichtung an Hinterkanten- und Randnahen Oberflächen (HRO) des Typs E, bei welchen auf der Schaufelspitze angebrachte Schlitze, Rundöffnungen oder funktional ähnliche Ersatzelemente vorgesehen sind. Schlitze, Rundöffnungen oder Ersatzelemente können unterschiedlichen Schaufelkammern zugeordnet sein. Lediglich die Figuren 15 bis 18 betreffen die Erfindung.

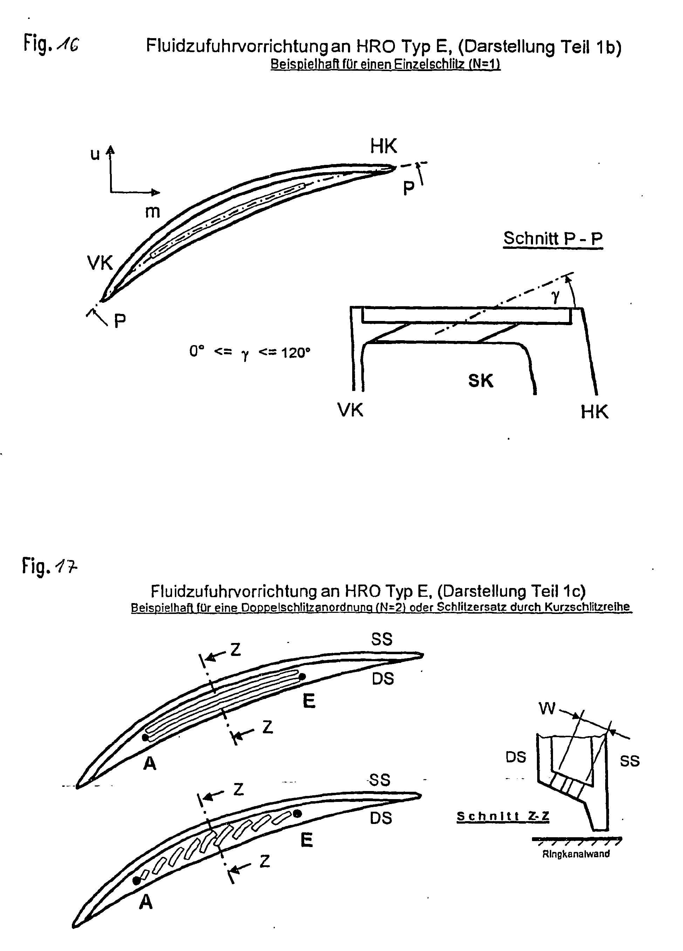

Dabei zeigt die Fig. 15 und 16 eine Fluidzufuhrvorrichtung an Hinterkanten- und Randnahen Oberflächen (HRO) des Typs E mit mindestens einem Schlitz oder Ersatzelementen entlang der Schaufelspitze, hier beispielhaft für den Fall eines Schlitzes

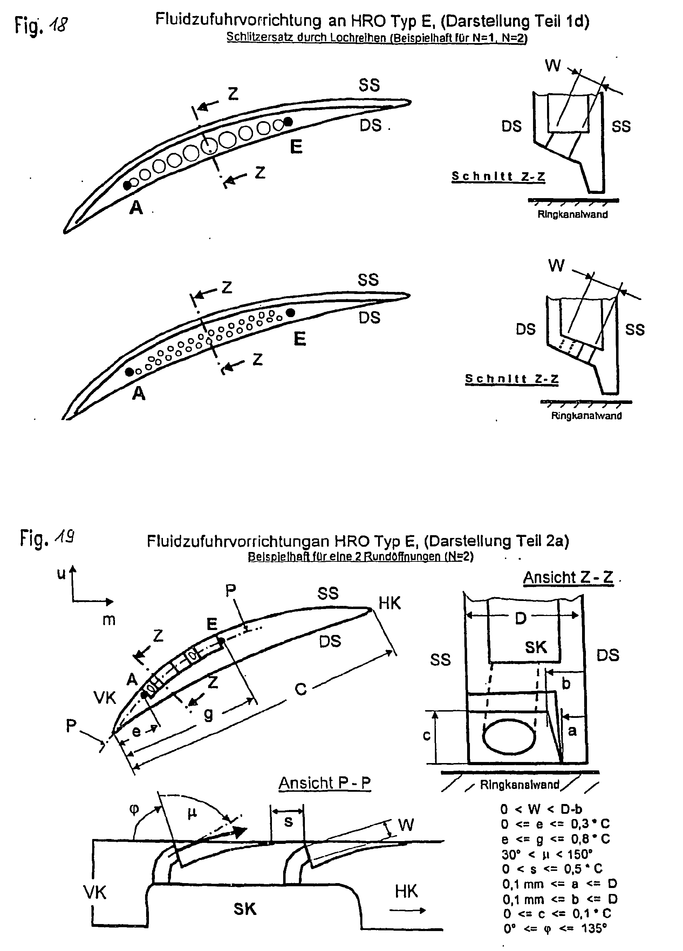

(N=1). Weitere Varianten hierzu sind in den Fig. 17 und 18 abgebildet.

Im einzelnen zeigen die Fig. 15 bis 18 folgende Details der erfindungsgemäßen Lösung:

Betrachtet wird die Spitze einer Schaufel in dem aus Meridianströmungsrichtung und Umfangsrichtung gebildeten Koordinatensystem (m, u). Die Schaufelspitze ist mit einem Absatz ausgeführt, dessen spezifische Formgebung durch die Größen a, b, c und ϕ gegeben ist. Die stirnseitige Absatzbreite a hat einen Betrag von minimal einem Zehntel Millimeter und wird maximal so groß wie die örtlich vorliegende Profildicke D (0,1 mm <= a < D). Die Absatzfußbreite b hat einen Betrag von minimal einem Zehntel Millimeter und wird maximal so groß wie die örtlich vorliegende Profildicke D (0,1 mm <= b < D). Die Absatztiefe c beträgt bis zu 10% der Profilsehnenlänge (0 < c <= 0,1*C). Der Absatzneigungswinkel ϕ, der gegen die Ringkanalwand gemessen wird, nimmt Beträge zwischen 0 und 75 Grad an (0° <= ϕ <= 75°). Die Größen a, b, c und ϕ können sich in den spezifizierten Grenzen mit der jeweils betrachteten Profiltiefe ändern.

Auf der Stirnseite der Schaufelspitze befinden sich N Schlitze (N>=1), die sich entlang des Profils erstrecken. Der Anfangspunkt A liegt zwischen der Vorderkante VK und einer Profiltiefe von 30% der Sehnenlänge C. Der Endpunkt E liegt zwischen dem Anfangspunkt A und einer Profiltiefe von 80% der Profilsehnenlänge C. Die Weite W der Schlitzanordnung ist veränderlich und nimmt maximal die je nach Profiltiefe aktuelle, um die Absatzfußbreite b reduzierte Profildicke D an (0 < W < D-b). Der Schlitz weist eckige, angefaste oder gerundete Oberflächenkanten auf. Sie besitzen an Anfangs- und Endpunkt eine eckige Form oder einen runden (langlochähnlichen) Abschluß. Senkrecht zur Profiltiefenrichtung betrachtet (Schnitt Z-Z) führt ein Schlitz senkrecht oder schräg unter dem zur Schaufelspitzenoberfläche gemessenen Winkel µ durch das Wandmaterial in eine Schaufelkammer SK (0° <= µ <= 165°). Längs zur Profiltiefenrichtung betrachtet (Schnitt P-P) führt ein Schlitz senkrecht oder schräg unter dem zur Schaufelspitzenoberfläche gemessenen Winkel γ durch das Wandmaterial in eine Schaufelkammer SK (0° <= γ <= 120°).

In einer abgewandelten Form tritt - bei gleichen Regeln hinsichtlich der Positionierung und des Verlaufes an der Schaufelspitze sowie der Beschaffenheit der Oberflächenkanten und Orientierung in der Schaufelspitzenwand - an die Stelle des Schlitzes eine Formation aus mehreren geraden oder gekrümmten Schlitzen mit einer maximalen Weite W der Schlitzkonfiguration von 0 < W < D-b.

In einer abgewandelten Form tritt - bei gleichen Regeln hinsichtlich der Positionierung und des Verlaufes entlang der Schaufelspitze sowie der Beschaffenheit der Oberflächenkanten und Orientierung in der Schaufelspitzenwand - an die Stelle mindestens eines Schlitzes eine Formation aus mehreren Löchern.

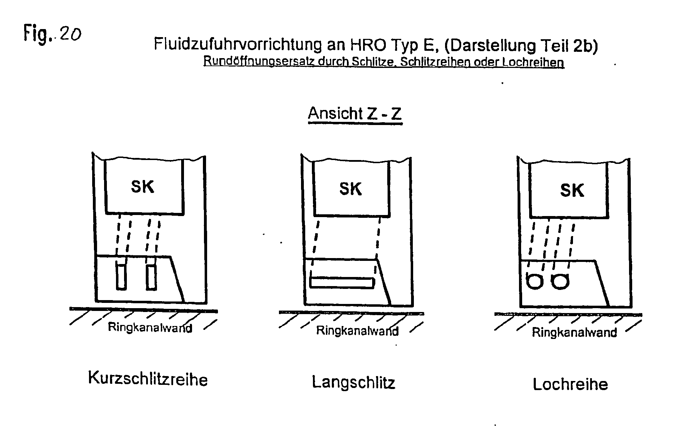

Die Fig. 19 zeigt eine Fluidzufuhrvorrichtung an Hinterkanten- und Randnahen Oberflächen (HRO) des Typs E mit mindestens einer in einer Ausnehmung vorgesehenen Rundöffnung, hier beispielhaft für den Fall zweier Rundöffnungen (N=2). Weitere Varianten mit Ersatzelementen sind in Fig. 20 abgebildet.

Im Einzelnen zeigen die Fig. 19 und 20 folgende Details :

Betrachtet wird die Spitze einer Schaufel in dem aus Meridianströmungsrichtung und Umfangsrichtung gebildeten Koordinatensystem (m,u). Die Schaufelspitze ist lokal mit mindestens einer absatzartigen Ausnehmung ausgeführt, dessen spezifische Formgebung durch die Größen a, b und c gegeben ist. Die stirnseitige Absatzbreite a hat einen Betrag von minimal einem Zehntel Millimeter und wird maximal so groß wie die örtlich vorliegende Profildicke D (0,1 mm <= a <= D). Die Absatzfußbreite b hat einen Betrag von minimal einem Zehntel Millimeter und wird maximal so groß wie die örtlich vorliegende Profildicke D (0,1 mm <= b <= D). Die Absatztiefe c beträgt bis zu 10% der Profilsehnenlänge (0 <= c <= 0,1*C). Die Größen a, b und c können sich in den spezifizierten Grenzen mit der jeweils betrachteten Profiltiefe ändern.

Die Ausnehmung ist unter dem Flankenwinkel ϕ, der gegen die Schaufeloberkante gemessen wird (0° <= ϕ <= 135°), in die Schaufelspitze eingearbeitet. Vom tiefsten Punkt aus verläuft die Ausnehmung in Profiltiefenrichtung immer weniger tief und endet schließlich wieder an der Schaufelspitzenoberfläche. Nach einer freien Distanz s kann eine weitere Ausnehmung folgen (0 <= s <= 0,5*C). Die gesamte Konfiguration der Ausnehmungen reicht vom Anfangspunkt A bis zum Endpunkt E. Der Anfangspunkt A liegt zwischen der Vorderkante VK und einer Profiltiefe von 30%der Sehnenlänge C. Der Endpunkt E liegt zwischen dem Anfangspunkt A und einer Profiltiefe von 80% der Profilsehnenlänge C.

An der unter dem Flankenwinkel ϕ geneigten Flanke der Ausnehmung befindet sich eine Rundöffnung, deren Achse am Austrittsquerschnitt ihrerseits in Profiltiefenrichtung gegen die Flanke um den Winkel µ geneigt ist (30° <= µ <= 150°). Die Weite W der Rundöffnung ist von Position zu Position veränderlich und nimmt maximal die Breite der Ausnehmung an (0 < W < D-b). Die Rundöffnung weist eckige, angefaste oder gerundete Oberflächenkanten auf.

In einer abgewandelten Form tritt - bei gleichen Regeln hinsichtlich der Positionierung und des Verlaufes an der Schaufelspitze sowie der Beschaffenheit der Oberflächenkanten und Orientierung in der Schaufelspitzenwand - an die Stelle einer Rundöffnung eine Lochreihe oder mindestens ein Schlitz, dessen Anfangs- und Endpunkt eine eckige Form oder einen runden (langlochähnlichen) Abschluß besitzen kann.

Bei der erfindungsgemäßen Strömungsarbeitsmaschine wird somit ein bislang unerreichtes Maß an Grenzschichtbeeinflussung erzielt. Dies ist bei unterschiedlichen Arten von Strömungsarbeitsmaschinen wie Bläsern, Verdichtern, Pumpen und Ventilatoren möglich. Je nach Ausführungsvariante sind eine aerodynamische Belastung und eine Strömungsumlenkung möglich, die bis zu 50% über den nach heutigem Stand der Technik erreichten Werten liegen. Für festgeschriebene Leistungswerte einer Strömungsarbeitsmaschine läßt sich unter Beibehaltung oder einer Verbesserung des Wirkungsgrades von bis zu 1% die Anzahl der verbauten Teile um etwa 30% gegenüber einer konventionellen Bauweise senken. Die Kosten sinken um 10% bis 15%. Bei Einsatz des neuen Schaufelkonzeptes im Verdichter eines Flugtriebwerkes mit rund 25000 Pfund Schub ergibt eine Reduzierung des spezifischen Kraftstoffverbrauches von bis zu 0,5% und eine Gewichtsersparnis von rund 5%.

### Bezugszeichenliste

- 1: Gehäuse
- 2: Schaufel
- 3: Schlitz
- 4: Schlitz
- 5: Stator
- 6: Rotor
- 7: Stator
- 8: Rotorschaufel
- 9: Statorschaufel
- 10: Ringkanal
- 11: Rotortrommel (Nabe)
- 12: Drosselorgan
- 13: Maschinenachse

## Patentansprüche

1. Strömungsarbeitsmaschine mit zumindest einem Rotor (6), der mehrere an einer rotierenden Welle befestigte Rotorschaufeln (8) umfasst, sowie mit einem einen Ringkanal (10) bildenden Gehäuse (1), welches unter Durchströmung vom Rotor (6) von einem Fluid durchströmt wird,
wobei Mittel zur Zufuhr von Fluid an mindestens einer Schaufel (8) einer Schaufelreihe des Rotors (6) an aerodynamisch kritischen Orten auf hinterkanten- und randnahen Oberflächen (HRO) vorgesehen sind,
wobei die hinterkanten- und randnahen Oberflächen (HRO) in Form von Oberflächen an den Schaufeln an deren freien Schaufelenden ausgebildet sind, die der Naben- oder der Gehäusekontur des Ringkanals (10) zugewandt sind,
wobei die Führung des zuzuführenden Fluids innerhalb von Schaufeln (8, 9) erfolgt,
wobei das Schaufelende eine absatzartige Ausnehmung aufweist, wobei die stirnseitige Absatzbreite a einen Wert von 0,1 mm ≤ a < D mit D gleich der örtlichen Profildicke D aufweist, wobei die Absatzfußbreite b einen Wert von 0,1mm ≤ b < D aufweist und wobei die Absatztiefe c einen Wert von 0 < c ≤ 0,1 C aufweist, wobei C die Profilsehnenlänge ist, wobei die Mittel zur Zufuhr von Fluid N-Schlitze mit N ≥ 1 umfassen, welche sich entlang des Profils erstrecken, und wobei der Anfangspunkt (A) der Schlitze zwischen der Vorderkante (VK) und einer Profiltiefe von 30% der Sehnenlänge liegt und wobei der Endpunkt (E) zwischen dem Anfangspunkt (A) und einer Profiltiefe von 80% der Profilsehnenlänge (C) liegt, wobei die absatzartige Ausnehmung unter einem Absatzneigungswinkel ϕ mit einem Wert von 0 ≤ ϕ ≤ 75°, der gegen die Ringkanalwand gemessen wird, geneigt ist, **dadurch gekennzeichnet, dass** die Mittel zur Zufuhr von Fluid in der absatzartigen Ausnehmung ausgebildet sind.

2. Strömungsarbeitsmaschine nach Anspruch 1, **dadurch gekennzeichnet, dass** eine Weite (W) des Schlitzes einen Wert zwischen 0 < W < D - b aufweist.

3. Strömungsarbeitsmaschine nach einem der Ansprüche 1 oder 2, **dadurch gekennzeichnet, dass** der Schlitz eckige, angefaste oder gerundete Oberflächenkanten mit am Anfangspunkt und Endpunkt eckiger Form oder rundem Abschluss umfasst.

4. Strömungsarbeitsmaschine nach einem der Ansprüche 1 bis 3, **dadurch gekennzeichnet, dass** senkrecht zu einer Profiltiefenrichtung betrachtet ein Schlitz senkrecht oder schräg unter einem zur Schaufelspitzenoberfläche gemessenen Winkel µ durch das Wandmaterial in eine im Innenraum der Schaufel ausgebildete Schaufelkammer (SK) führt, mit 0° ≤ µ ≤ 165°.

5. Strömungsarbeitsmaschine nach einem der Ansprüche 1 bis 4, **dadurch gekennzeichnet, dass** längs zur Profiltiefenrichtung betrachtet ein Schlitz senkrecht oder schräg unter einem zur Schaufelspitzenoberfläche gemessenen Winkel γ in eine Schaufelkammer (SK) führt, mit 0° ≤ γ ≤ 120°.

6. Strömungsarbeitsmaschine nach einem der Ansprüche 1 bis 5, **dadurch gekennzeichnet, dass** der Schlitz eine Formation aus mehreren geraden oder gekrümmten Schlitzen mit einer maximalen Weite (W) umfasst, mit 0 < W < D - B.

## Claims

1. Fluid-flow machine with at least one rotor (6), which includes several rotor blades (8) attached to a rotating shaft and with a casing (1) which forms an annulus (10) and is passed by a fluid flowing through the rotor (6),
- with means for the supply of fluid to at least one blade (8) of a blade row of the rotor (6) being provided on aerodynamically critical points on trailing edge and rim-near surfaces (HRO),
- with the trailing edge and rim-near surfaces (HRO) on the blades being provided on the free blade ends in the form of surfaces facing the hub and casing contour of the annulus (10),
- with the guidance of the fluid to be supplied being effected within the blades (8, 9),
- with the blade end featuring a step-like recess, with the front-side step width "a" having a value of 0.1 mm ≤ a < D, where D equals the local profile thickness D, with the step foot width "b" having a value of 0.1 mm ≤ b < D and the step depth "c" having a value of 0 < c ≤ 0.1 C, with C being the profile chord length, with the means for fluid supply including N slots, where N ≤ 1, which extend along the profile, and with the starting point (A) of the slots being located between the leading edge (VK) and a profile depth of 30% of the chord length and with the end point (E) being located between the starting point (A) and a profile depth of 80% of the profile chord length (C), with the step-like recess being inclined at a step inclination angle ϕ of 0 ≤ ϕ ≤ 75° measured against the annulus wall, **characterized in that** the means for fluid supply are provided in the step-like recess.

2. Fluid-flow machine in accordance with Claim 1, **characterized in that** a width (W) of the slot has a value of 0 < W < D - b.

3. Fluid-flow machine in accordance with one of the Claims 1 or 2, **characterized in that** the slot includes angular, chamfered or rounded surface edges with angular shape or round rim at the starting and end points.

4. Fluid-flow machine in accordance with one of the Claims 1 to 3, **characterized in that**, when viewed vertically to a profile depth direction, a slot leads to a blade chamber (SK) provided in the interior of the blade, vertically or obliquely through the wall material at an angle µ measured relative to the blade tip surface, with 0° ≤ µ ≤ 165°.

5. Fluid-flow machine in accordance with one of the Claims 1 to 4, **characterized in that**, when viewed along the profile depth direction, a slot leads to a blade chamber (SK), vertically or obliquely at an angle γ measured relative to the blade tip surface, with 0° ≤ γ ≤ 120°.

6. Fluid-flow machine in accordance with one of the Claims 1 to 5, **characterized in that** the slot includes a formation of several rectilinear or curvilinear slots with a maximum width (W), with 0 < W < D - B.

## Revendications

1. Turbomachine avec au moins un rotor (6) comprenant plusieurs aubes de rotor (8) fixées sur un arbre rotatif, ainsi qu'un carter (1) formant un canal annulaire (10) qui est traversé par un fluide lors de l'écoulement dans le rotor (6),
- sachant que des moyens pour amener du fluide à au moins une aube (8) d'une rangée d'aubes du rotor (6) sont prévus à des points aérodynamiquement critiques sur des surfaces du bord de fuite et à proximité des bords (HRO),
- sachant que les surfaces du bord de fuite et à proximité des bords (HRO) sur les aubes sont réalisées aux extrémités libres des aubes sous forme de surfaces orientées vers le contour du moyeu ou du carter du canal annulaire (10),
- sachant que le guidage du fluide à amener a lieu à l'intérieur d'aubes (8, 9),
- sachant que l'extrémité de l'aube présente un évidement en forme de gradin, que la largeur frontale "a" du gradin a une valeur telle que 0,1 mm ≤ a < D où D est l'épaisseur locale D du profil, que la largeur "b" du fond du gradin a une valeur telle que 0,1 mm ≤ b < D et que la profondeur "c" du gradin a une valeur telle que 0 < c ≤ 0,1 C, où C est la longueur de corde du profil, que les moyens pour amener du fluide comprennent N fentes, où N ≥ 1, qui s'étendent le long du profil, et que le point initial (A) des fentes est situé entre le bord d'attaque (VK) et une profondeur de profil égale à 30 % de la longueur de corde et que le point final (E) est situé entre le point initial (A) et une profondeur de profil égale à 80% de la longueur de corde du profil (C), que l'évidement en forme de gradin est incliné selon un angle d'inclinaison de gradin ϕ d'une valeur telle que 0 ≤ ϕ ≤ 75°, qui est mesuré contre la paroi du canal annulaire, **caractérisée en ce que** les moyens pour amener du fluide sont formés dans l'évidement en forme de gradin.

2. Turbomachine selon la revendication n° 1, **caractérisée en ce qu'**une largeur (W) de la fente a une valeur telle que 0 < W < D - b.

3. Turbomachine selon une des revendications n° 1 ou n° 2, **caractérisée en ce que** la fente comprend des arêtes de surface anguleuses, biseautées ou arrondies avec une forme anguleuse ou une bordure arrondie au point initial et au point final.

4. Turbomachine selon une des revendications n° 1 à n° 3, **caractérisée en ce que**, vue perpendiculairement à un sens de profondeur du profil, une fente mène à une chambre d'aube (SK) formée à l'intérieur de l'aube, en traversant le matériau de la paroi perpendiculairement ou en biais sous un angle µ mesuré par rapport à la surface du bout d'aube, tel que 0° ≤ µ ≤ 165°.

5. Turbomachine selon une des revendications n° 1 à n° 4, **caractérisée en ce que**, vue le long du sens de profondeur du profil, une fente mène à une chambre d'aube (SK) perpendiculairement ou en biais sous un angle γ mesuré par rapport à la surface du bout d'aube, tel que 0° ≤ γ ≤ 120°.

6. Turbomachine selon une des revendications n° 1 à n° 5, **caractérisée en ce que** la fente comprend une formation constituée de plusieurs fentes rectilignes ou curvilignes avec une largeur maximale (W), telle que 0 < W < D - B.
